# EUROPÄISCHE PATENTANMELDUNG

(11) **EP 1 994 819 A1**
(43) Veröffentlichungstag der Anmeldung: **26.11.2008**
(21) Anmeldenummer: 07010151.4
(22) Anmeldetag: 22.05.2007
(51) Int. Cl.: A01J 25/13

(54) **Verfahren zum Reinigen von Käseformen**

(71) Anmelder: Chemische Fabrik Dr. Weigert GmbH & Co. KG, 20539 Hamburg (DE)
(72) Erfinder: Rössner, Harald, 90471 Nürnberg (DE); Lewens, Ingo, 21720 Grünendeich (DE)
(74) Vertreter: Keussen, Christof

(57) **Zusammenfassung**

Gegenstand der Erfindung ist ein Verfahren zum Reinigen von Käseformen. Erfindungsgemäß sind folgende Schritte vorgesehen:
a. Reinigen der Käseform mit einer Reinigerlösung,
b. Aufbringen eines Trennmittels auf die gereinigten Oberflächen.

Das Trennmittel verhindert insbesondere nach einer alkalischen Reinigung ein Festkleben des Käses an der gereinigten Form.

## Beschreibung

Die Erfindung betrifft ein Verfahren zum Reinigen von Käseformen.

Käseformen in der Nahrungsmittelindustrie werden nach der Benutzung (Herstellung von Käse) üblicherweise in geeigneten Waschanlagen, in der Regel kontinuierlich arbeitenden Transportbandwaschanlagen, gereinigt.

Der Erfindung liegt die Aufgabe zugrunde, ein wirksames und die Eigenschaften der Käseformen zur Herstellung von Käse nicht oder nur wenig beeinträchtigendes Reinigungsverfahren sowie einen entsprechenden Verfahrenszyklus zur Verfügung zu stellen.

Das erfindungsgemäße Verfahren zum Reinigen von Käseformen weist folgende Schritte auf:
a. Reinigen der Käseform mit einer Reinigerlösung,
b. Aufbringen eines Trennmittels auf die gereinigten Oberflächen.

Zunächst seien einige im Rahmen der Erfindung verwendete Begriffe erläutert.

Der Begriff Käseformen bezeichnet in der Lebensmittelproduktion verwendete Formen für die Käseherstellung. Solche Käseformen können beispielsweise aus einem Kunststoff oder Metall bspw. Edelstahl bestehen. Sie weisen in der Regel Öffnungen oder Schlitze für das Auslaufen von im Käsereiprozess anfallender Molke auf.

Bei dem Verfahren wird die Käseform mit einer Reinigerlösung gereinigt. Der Begriff Reinigerlösung bezeichnet die anwendungsfertig verdünnte Lösung, die in der Regel aus einem Konzentrat durch Verdünnen mit Wasser als Lösungsmittel hergestellt wird.

Erfindungsgemäß ist vorgesehen, dass auf die gereinigten Oberflächen ein Trennmittel aufgebracht wird. Der Begriff Trennmittel bezeichnet jegliche Substanz, die bei der auf das Reinigen und das Aufbringen des Trennmittels folgenden Käseherstellung ein Verkleben der Form mit dem Käse verhindert oder verringert und auf diese Weise das Abformen des Käses nach der Herstellung aus der Käseform erleichtert oder überhaupt erst ermöglicht.

Die Reinigerlösung kann insbesondere alkalisch sein und/oder Oxidationsmittel wie beispielsweise Aktivchlor aufweisen. Solche alkalisch/aktivchlorhaltigen Reinigungslösungen haben den Vorteil, dass sie bei der Reinigung von Käseformen wirksam organische Verunreinigungen entfernen, die zum einen die Käseform nach mehrfacher Verwendung verfärben und damit unansehnlich machen können (beispielsweise Karotine) und andererseits dazu führen, dass die Molke-Auslaufporen oder -Schlitze in den Formen nach und nach durch organische Bestandteile des Käses verstopfen.

Die Erfindung hat erkannt, dass solche alkalischen bzw. alkalisch/aktivchlorhaltigen Reinigungslösungen die genannten organischen Verunreinigungen zwar wirksam entfernen, aber dazu führen, dass bei der erneuten Inbenutzungnahme der Käseform nach einer solchen alkalischen Reinigung es zu einem Verkleben des Käses mit der alkalisch gereinigten Form kommen kann. Der gepresste Käse fällt dann nicht oder nur beschädigt aus der Form und kann nur noch zu wirtschaftlich unattraktivem Schmelzkäse verarbeitet werden.

Das erfindungsgemäß verwendete Trennmittel verhindert oder verringert diesen Nachteil.

Die verwendeten Trennmittel sind vorzugsweise lebensmittelverträglich bzw. für die Verwendung im Rahmen der Lebensmittelverarbeitung zugelassen. Es kann sich beispielsweise um Wachse und/oder Fette handeln.

Das Aufbringen des Trennmittels auf die gereinigten Oberflächen kann vorzugsweise durch Aufsprühen geschehen. Die verwendeten Trennmittel sind daher vorzugsweise in Wasser als Lösungsmittel löslich oder darin emulgierbar.

Erfindungsgemäß geeignete Trennmittel sind Fettsäureester, insbesondere Ester von Speisefettsäuren. Geeignet sind insbesondere Mono- und/oder Diglyceride von Speisefettsäuren. Solche Mischungen von Mono- und Diglyceriden von Speisefettsäuren sind als Lebensmittelzusatzstoffe unter der Nummer E471 zugelassen. Die Fettsäureester werden bevorzugt in einer Konzentration von 1 bis 10 Gew.-%, weiter vorzugsweise 2 bis 8 Gew.-%, weiter vorzugsweise 3 bis 7 Gew.-%, weiter vorzugsweise etwa 5 Gew.-% in wässriger Lösung vorliegend als Trennmittel aufgesprüht.

Die Reinigung der Käseformen erfolgt bevorzugt maschinell. Bevorzugt geschieht dies in einer geeigneten Waschanlage, die bevorzugt kontinuierlich arbeitet und die von den zu reinigenden Käseformen auf einer Fördereinrichtung durchlaufen wird.

Das Aufbringen des Trennmittels kann manuell im Anschluss an die Reinigung erfolgen, bevorzugt erfolgt es ebenfalls maschinell durch in oder nach der Waschanlage angeordnete geeignete Düsen.

Bei einer bevorzugten Ausführungsform der Erfindung weist das Reinigen folgende Schritte auf:
a. Benetzen der Käseform mit einer alkalischen Reinigerlösung,
b. Einwirkenlassen der alkalischen Reinigerlösung,
c. Abspülen der alkalischen Reinigerlösung,
d. Benetzen der Käseform mit einer sauren Reinigerlösung,
e. Einwirkenlassen der sauren Reinigerlösung,
f. Abspülen der sauren Reinigerlösung.

Es handelt sich hier um die Kombination einer alkalischen Reinigung (besonders geeignet zum Entfernen organischer Verunreinigungen) mit einer sauren Reinigung, die insbesondere anorganische Verunreinigungen wie beispielsweise Calciumsalzablagerungen entfernt. Im Anschluss an dieses zweistufige Reinigen erfolgt dann wieder das Aufbringen des Trennmittels.

Erfindungsgemäß ist es bevorzugt, dass die alkalische Reinigerlösung 0,2 bis 4 Gew.-%, vorzugsweise 0,3 bis 3 Gew.-%, weiter vorzugsweise 0,4 bis 2 Gew.-%, weiter vorzugsweise 0,5 bis 1,5 Gew.-% Gesamtalkalität berechnet als NaOH enthält.

Das Einwirkenlassen der alkalischen Reinigerlösung kann vorzugsweise über einen Zeitraum von 10 bis 600 s, weiter vorzugsweise 15 bis 300 s, weiter vorzugsweise 20 bis 180 s, weiter vorzugsweise 60 bis 90 s erfolgen. Das Einwirkenlassen kann in Ruhe erfolgen, d.h. ohne weiteres fortlaufendes Besprühen mit alkalischer Reinigerlösung. Das Einwirkenlassen kann aber auch erfolgen unter fortlaufendem Besprühen mit Reinigerlösung, wobei dann gelöster Schmutz fortlaufend abgetragen und frische Reinigungslösung an die zu reinigenden Oberflächen gebracht wird. Im Rahmen der Erfindung erfolgt das Benetzen bevorzugt durch Besprühen mit geeigneten Düsen, es kann ggf. aber auch durch Eintauchen in die entsprechende Lösung erfolgen.

Die saure Reinigerlösung kann bevorzugt einen pH-Wert von 4 oder kleiner, weiter vorzugsweise 3 oder kleiner, weiter vorzugsweise 2 oder kleiner aufweisen. Vorzugsweise enthält die saure Reinigerlösung geeignete organische Säuren wie beispielsweise Ameisensäure und/oder anorganische Säuren wie beispielsweise Phosphorsäure, Schwefelsäure oder Cumolsulfonsäure. Sie kann zusätzlich Tenside enthalten, beispielsweise geeignete nichtionische Tenside.

Bevorzugt ist es, dass das Einwirkenlassen der sauren Reinigerlösung über einen Zeitraum von 10 bis 600 s, vorzugsweise 15 bis 300 s, weiter vorzugsweise 20 bis 180 s, weiter vorzugsweise 60 bis 90 s, weiter vorzugsweise 15 bis 30 s erfolgt.

Die Erfindung hat weiter erkannt, dass das kombinierte alkalisch/saure Reinigen (Anspruch 8) gefolgt von einem Aufbringen von Trennmittel nicht bei jedem Reinigungszyklus erforderlich ist. Das die Benutzbarkeit der Käseform beeinträchtigende Anhaften des Käses wird primär durch alkalische Reinigungsmittel verursacht.

Gegenstand der Erfindung ist daher auch ein Verfahrenszyklus zur wiederholten Verwendung und Reinigung von Käseformen, der folgende Schritte aufweist:
a. Verwendung der Käseform zur Käseherstellung,
b. Benetzen der Käseform mit einer sauren Reinigerlösung,
c. Einwirkenlassen der sauren Reinigerlösung,
d. Abspülen der sauren Reinigerlösung,
e. 20 bis 500faches, vorzugsweise 50 bis 400faches, weiter vorzugsweise 100 bis 300faches Wiederholen der Schritte a. bis d.,
f. Durchführen einer Reinigung nach einem der Ansprüche 8 bis 12,
g. Aufbringen eines Trennmittels auf die gereinigten Oberflächen.

Bei diesem Verfahrenszyklus wird die Käseform nach jeder Verwendung sauer gereinigt. Anschließend wird sie sofort wieder verwendet, ohne zusätzlich alkalisch gereinigt zu werden oder mit einem Trennmittel versehen zu werden.

Wenn nach einer bestimmten Anzahl von Verwendungszyklen die Form durch organische Verunreinigungen sich beginnt zu verfärben oder der Molkeauslauf beeinträchtigt wird, erfolgt als eine Grundreinigung ein kombiniertes alkalisch/saures Reinigen, gefolgt von dem Aufbringen eines Trennmittels auf die gereinigten Oberflächen. Es versteht sich, dass im Rahmen der Erfindung das Aufbringen von Trennmitteln nur auf diejenigen Oberflächen erfolgen muss, die mit dem Käse in Berührung kommen. Die übrigen Flächen (insbesondere Außenflächen) der Käseform können ggf. beim Aufbringen des Trennmittels ebenfalls mit in Berührung kommen, insbesondere wenn das Aufbringen durch Aufsprühen erfolgt.

Der erfindungsgemäße Verfahrenszyklus erlaubt ein besonders wirtschaftliches und dabei wirksames Reinigen von Käseformen bei wiederholter Benutzung. Da die alkalische Reinigung lediglich intermittierend durchgeführt wird, wenn sich entsprechende organische Beläge aufzubauen beginnen, ist dementsprechend die Verwendung des Trennmittels auch nur im gleichen Intervall erforderlich.

Gegenstand der Erfindung ist ferner die Verwendung von Fettsäureestern als Trennmittel für Käseformen. Die bevorzugten Ausgestaltungen des Trennmittels sind vorstehend im Zusammenhang mit dem erfindungsgemäßen Verfahren bereits beschrieben.

Ein Ausführungsbeispiel der Erfindung wird nachfolgend beschrieben.

Die folgenden Reinigungs- bzw. Trennmittellösungen werden verwendet:
Saure Reinigerlösung: Wässrige Lösung von niroklar^{®} 5000, (Chemische Fabrik Dr. Weigert GmbH & Co. KG, Hamburg) eingestellt auf eine Leitfähigkeit von 3,0 mS/cm bis 4,0 mS/cm. Dies entspricht einer Konzentration von etwa 0,5 bis 0,75 Gew.-%.
niroklar^{®} 5000 enthält im Konzentrat als wesentliche Bestandteile Ameisensäure, ferner in geringeren Anteilen Phosphorsäure, Schwefelsäure, nichtionische Tenside und Cumolsulfonsäure.
Alkalische Reinigerlösung: Als alkalische Reinigerlösung wurde eine Lösung von 3 Gew.-% neomoscan^{®} FA2036 (Chemische Fabrik Dr. Weigert GmbH & Co. KG, Hamburg)in Wasser verwendet. neomoscan^{®} FA2036 enthält Natriumhydroxid und Kaliumhydroxid als Alkalien sowie Phosphonate und nichtionische Tenside.
Trennmittellösung: 5%ige wässrige Lösung von Struktol^{®} SB2010A (Firma Schill und Seilacher). Struktol^{®} SB2010A enthält Mono- und Diclyceride von Speisefettsäuren.

Käseblockformen werden nach jeder Verwendung in einer entsprechenden Formenspülmaschine mit saurer Reinigerlösung besprüht. Nach etwa 25 s Einwirkzeit erfolgt eine Abspritzung mit Frischwasser. Die so gereinigten und abgespülten Käseformen werden erneut für die Käseherstellung verwendet.

Nach 300 solchen Verwendungs- und Reinigungszyklen werden die Käseformen zunächst in der Waschanlage mit alkalischer Reinigerlösung besprüht, diese wird 70 s einwirken gelassen. Anschließend erfolgt ein Abspritzen mit Frischwasser. Darin anschließend erfolgt das saure Reinigen wie vorstehend angegeben. Dieser Wechsel aus alkalischer und saurer Reinigerlösung wird als Grundreinigung 3 bis 5 mal wiederholt.Im Anschluss an das saure Reinigen werden die Formen mit der Trennmittellösung eingesprüht.

Dieser Verwendungs-/Reinigungszyklus verhindert, dass die Formen sich sichtbar verfärben und/oder die Molkeauslauföffnungen verstopfen. Der Einsatz des Trennmittels nach jeder alkalischen Grundreinigung verhindert sicher ein Festkleben des Käses beim Entleeren der Formen.

## Patentansprüche

1. Verfahren zum Reinigen von Käseformen, mit den Schritten:
a. Reinigen der Käseform mit einer Reinigerlösung,
b. Aufbringen eines Trennmittels auf die gereinigten Oberflächen.

2. Verfahren nach Anspruch 1, **dadurch gekennzeichnet, dass** eine alkalische Reinigerlösung verwendet wird.

3. Verfahren nach Anspruch 1 oder 2, **dadurch gekennzeichnet, dass** das Trennmittel Fettsäureester enthält.

4. Verfahren nach Anspruch 3, **dadurch gekennzeichnet, dass** das Trennmittel Ester von Speisefettsäuren enthält.

5. Verfahren nach Anspruch 4, **dadurch gekennzeichnet, dass** das Trennmittel Mono- und oder Diglyceride von Speisefettsäuren enthält.

6. Verfahren nach einem der Ansprüche 3 bis 5, **dadurch gekennzeichnet, dass** die Fettsäureester in einer Konzentration von 1 bis 10 Gew.-%, vorzugsweise 2 bis 8 Gew.-%, weiter vorzugsweise 3 bis 7 Gew.-% in wässriger Lösung vorliegen.

7. Verfahren nach einem der Ansprüche 1 bis 6, **dadurch gekennzeichnet, dass** die Reinigung maschinell erfolgt.

8. Verfahren nach einem der Ansprüche 1 bis 7, **dadurch gekennzeichnet, dass** das Reinigen folgende Schritte aufweist:
a. Benetzen der Käseform mit einer alkalischen Reinigerlösung,
b. Einwirkenlassen der alkalischen Reinigerlösung,
c. Abspülen der alkalischen Reinigerlösung,
d. Benetzen der Käseform mit einer sauren Reinigerlösung,
e. Einwirkenlassen der sauren Reinigerlösung,
f. Abspülen der sauren Reinigerlösung.

9. Verfahren nach Anspruch 8, **dadurch gekennzeichnet, dass** die alkalische Reinigerlösung 0,2 bis 4 Gew.-%, vorzugsweise 0,3 bis 3 Gew.-%, weiter vorzugsweise 0,4 bis 2 Gew.-%, weiter vorzugsweise 0,5 bis 1,5 Gew.-% Gesamtalkalität berechnet als NaOH enthält.

10. Verfahren nach Anspruch 8 oder 9, **dadurch gekennzeichnet, dass** das Einwirkenlassen der alkalischen Reinigerlösung über einen Zeitraum von 10 bis 600 s, vorzugsweise 15 bis 300 s, weiter vorzugsweise 20 bis 180 s, weiter vorzugsweise 60 bis 90 s erfolgt.

11. Verfahren nach einem der Ansprüche 8 bis 10, **dadurch gekennzeichnet, dass** die saure Reinigerlösung einen pH-Wert von 4 oder kleiner, vorzugsweise 3 oder kleiner, weiter vorzugsweise 2 oder kleiner aufweist.

12. Verfahren nach einem der Ansprüche 8 bis 11, **dadurch gekennzeichnet, dass** das Einwirkenlassen der sauren Reinigerlösung über einen Zeitraum von 10 bis 600 s, vorzugsweise 15 bis 300 s, weiter vorzugsweise 20 bis 180 s, weiter vorzugsweise 60 bis 90 s erfolgt.

13. Verfahrenszyklus zur wiederholten Verwendung und Reinigung von Käseformen, mit den Schritten:
a. Verwendung der Käseform zur Käseherstellung,
b. Benetzen der Käseform mit einer sauren Reinigerlösung,
c. Einwirkenlassen der sauren Reinigerlösung,
d. Abspülen der sauren Reinigerlösung,
e. 20 bis 500faches, vorzugsweise 50 bis 400faches, weiter vorzugsweise 100 bis 300faches Wiederholen der Schritte a. bis d.,
f. Durchführen einer Reinigung nach einem der Ansprüche 8 bis 12,
g. Aufbringen eines Trennmittels auf die gereinigten Oberflächen.

14. Verfahrenszyklus nach Anspruch 13, **dadurch gekennzeichnet, dass** das Trennmittel Fettsäureester enthält.

15. Verfahrenszyklus nach Anspruch 14, **dadurch gekennzeichnet, dass** das Trennmittel Ester von Speisefettsäuren enthält.

16. Verfahrenszyklus nach Anspruch 15, **dadurch gekennzeichnet, dass** das Trennmittel Mono- und oder Diglyceride von Speisefettsäuren enthält.

17. Verfahrenszyklus nach einem der Ansprüche 14 bis 16, **dadurch gekennzeichnet, dass** die Fettsäureester in einer Konzentration von 1 bis 10 Gew.-%, vorzugsweise 2 bis 8 Gew.-%, weiter vorzugsweise 3 bis 7 Gew.-% in wässriger Lösung vorliegen.

18. Verwendung von Fettsäureestern als Trennmittel für Käseformen.

19. Verwendung nach Anspruch 18, **dadurch gekennzeichnet, dass** das Trennmittel Ester von Speisefettsäuren enthält.

20. Verwendung nach Anspruch 19, **dadurch gekennzeichnet, dass** das Trennmittel Mono- und oder Diglyceride von Speisefettsäuren enthält.

21. Verwendung nach einem der Ansprüche 18 bis 20, **dadurch gekennzeichnet, dass** die Fettsäureester in einer Konzentration von 1 bis 10 Gew.-%, vorzugsweise 2 bis 8 Gew.-%, weiter vorzugsweise 3 bis 7 Gew.-% in wässriger Lösung vorliegen.
